# EUROPÄISCHE PATENTANMELDUNG

(11) **EP 1 748 270 A1**
(43) Veröffentlichungstag der Anmeldung: **31.01.2007**
(21) Anmeldenummer: 06013786.6
(22) Anmeldetag: 04.07.2006
(51) Int. Cl.: F28F 3/02, B23K 1/00

(54) **Wärmetauscher**

(30) Priorität: 27.07.2005 DE 102005034997
(71) Anmelder: Behr GmbH & Co. KG, 70469 Stuttgart (DE)
(72) Erfinder: Ensminger, Steffen, Dipl.-Ing., 73274 Notzingen (DE); Kämmerer, Martin, Dipl.-Ing., 74321 Bietigheim-Bissingen (DE)

(57) **Zusammenfassung**

Die Erfindung betrifft einen Wärmetauscher mit mindestens einem Strömungskanal, der von einem zu temperierenden Medium durchströmt und in dem mindestens eine Strömungsleiteinrichtung (1') mit mindestens einer Strömungskanalbegrenzungsfläche verlötet ist.

Um einen Wärmetauscher zu schaffen, der stabile und qualitativ hochwertige Lötverbindungen umfasst, weist die Strömungsleiteinrichtung (1') mindestens ein Lotdepot auf.

## Beschreibung

Die Erfindung betrifft einen Wärmetauscher mit mindestens einem Strömungskanal, der von einem Medium durchströmt und in dem mindestens eine Strömungsleiteinrichtung mit mindestens einer Strömungskanalbegrenzungsfläche verlötet ist.

Die Strömungsleiteinrichtung kann zum Beispiel von einer Turbulenzeinlage gebildet werden, die ein wellenförmiges Profil aufweist. Die Turbulenzeinlage kann durch Löten in einem Flachrohr, das einen Strömungskanal begrenzt, befestigt werden. Das zum Löten benötigte Lot kann zum Beispiel in Form einer Folie, einer Beschichtung, als Plattierung oder in Pastenform an der Kontaktstelle der zu verlötenden Flächen bereitgestellt werden. Viele Lotlegierungen sind nicht als Plattierung oder in Form von Folie erhältlich. Bei der Verwendung von Lotpasten kann es passieren, dass sich bei einer stärkeren mechanischen Beanspruchung ein Teil der aufgetragenen Lotpaste von der zugehörigen Fläche löst, was die Qualität der Lötverbindung beeinträchtigt.

Aufgabe der Erfindung ist es, einen Wärmetauscher mit mindestens einem Strömungskanal, der von einem Medium durchströmt und in dem mindestens eine Strömungsleiteinrichtung mit mindestens einer Strömungskanalbegrenzungsfläche verlötet ist, zu schaffen, der stabile und qualitativ hochwertige Lötverbindungen aufweist.

Die Aufgabe ist bei einem Wärmetauscher mit mindestens einem Strömungskanal, der von einem vorzugsweise zu temperierenden Medium durchströmt und in dem mindestens eine Strömungsleiteinrichtung mit mindestens einer Strömungskanalbegrenzungsfläche verlötet ist, dadurch gelöst, dass die Strömungsleiteinrichtung mindestens ein Lotdepot aufweist. Das Lotdepot gewährleistet eine sichere Bereitstellung einer ausreichenden Lotmenge an den oder in der Nähe der zu verlötenden Flächen. Das Lot liegt vor dem Verlöten vorzugsweise in fester Form in dem Lotdepot vor. Dadurch wird auch bei einer stärkeren mechanischen Belastung ein unerwünschtes Ablösen von Lotmaterial sicher verhindert.

Ein bevorzugtes Ausführungsbeispiel des Wärmetauschers ist dadurch gekennzeichnet, dass die Strömungsleiteinrichtung eine Turbulenzeinlage mit einem im Wesentlichen wellenförmigen Profil umfasst, wobei mindestens eine einer Strömungskanalbegrenzungsfläche zugewandte Fläche der Turbulenzeinlage mindestens eine Vertiefung aufweist, die ein Lotdepot bildet. Die Vertiefung ermöglicht eine sichere Unterbringung des Lotdepots, so dass auch beim Einführen der Turbulenzeinlage in ein Flachrohr ein unerwünschtes Ablösen von Lot wirksam verhindert wird.

Ein weiteres bevorzugtes Ausführungsbeispiel des Wärmetauschers ist dadurch gekennzeichnet, dass die Lotdepotvertiefung im Wesentlichen die Gestalt eines Kugelabschnitts aufweist. Die Größe des Kugelabschnitts und die Anzahl der Kugelabschnitte sind an die benötigte Lotmenge angepasst.

Ein weiteres bevorzugtes Ausführungsbeispiel des Wärmetauschers ist dadurch gekennzeichnet, dass die Lotdepotvertiefung im Wesentlichen die Gestalt eines Quaders aufweist. Die Größe des Quaders und die Anzahl der Quader sind an die benötigte Lotmenge angepasst.

Ein weiteres bevorzugtes Ausführungsbeispiel des Wärmetauschers ist dadurch gekennzeichnet, dass sich die Lotdepotvertiefung über die gesamte Länge oder Breite der der Strömungskanalbegrenzungsfläche zugewandten Fläche der Turbulenzeinlage erstreckt. Dadurch wird eine besonders gleichmäßige Versorgung der mit Lot zu benetzenden Flächen ermöglicht.

Weitere bevorzugte Ausführungsbeispiele des Wärmetauschers sind dadurch gekennzeichnet, dass die Lotdepotvertiefung im Querschnitt im Wesentlichen die Gestalt eines Kreisbogens oder eines U's aufweist. Diese Querschnitte haben sich im Rahmen der vorliegenden Erfindung als besonders vorteilhaft erwiesen.

Ein weiteres bevorzugtes Ausführungsbeispiel des Wärmetauschers ist dadurch gekennzeichnet, dass die Strömungsleiteinrichtung eine Turbulenzeinlage mit mehreren Rippenabschnitten umfasst, die versetzt zueinander angeordnet sind, wobei mindestens ein freiliegender Bereich einer Stirnseite mindestens eines Rippenabschnitts mit einem Lotdepot ausgestattet ist. Dieser Lotdepotort hat den Vorteil, dass er beim Einführen der Turbulenzeinlage keiner mechanischen Beanspruchung ausgesetzt wird.

Ein weiteres bevorzugtes Ausführungsbeispiel des Wärmetauschers ist dadurch gekennzeichnet, dass der freiliegende, stirnseitige Bereich des Rippenabschnitts im Wesentlichen senkrecht zu einer Fläche der Turbulenzeinlage angeordnet ist, die einer Strömungskanalbegrenzungsfläche zugewandt ist. Diese Anordnung hat sich im Rahmen der vorliegenden Erfindung als besonders vorteilhaft erwiesen.

Ein weiteres bevorzugtes Ausführungsbeispiel des Wärmetauschers ist dadurch gekennzeichnet, dass der freiliegende, stirnseitige Bereich des Rippenabschnitts im Wesentlichen die Gestalt eines Rechtecks aufweist. Vorzugsweise wird die ganze Fläche des freiliegenden Bereichs für das Lotdepot genutzt.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine perspektivische Darstellung einer Turbulenzeinlage mit einem zinnenförmigen Querschnitt;
- Figur 2: eine perspektivische Darstellung einer ähnlichen Turbulenzeinlage wie in Figur 1 mit Lotdepotvertiefungen, die einen kreisbogenförmigen Querschnitt aufweisen;
- Figur 3: eine perspektivische Darstellung einer ähnlichen Turbulenzeinlage wie in Figur 1 mit Lotdepots, die, im Querschnitt betrachtet, nach außen gewölbt sind;
- Figur 4: eine perspektivische Darstellung einer ähnlichen Turbulenzeinlage wie in Figur 1 mit Lotdepotvertiefungen, die einen zinnenförmigen Querschnitt aufweisen;
- Figur 5: eine perspektivische Darstellung einer ähnlichen Turbulenzeinlage wie in Figur 1 mit im Wesentlichen quaderförmigen Vertiefungen;
- Figur 6: eine perspektivische Darstellung einer ähnlichen Turbulenzeinlage wie in Figur 1 mit kugelabschnittsförmigen Vertiefungen;
- Figur 7: eine perspektivische Darstellung einer ähnlichen Turbulenzeinlage wie in Figur 1 mit quaderförmigen Unterbrechungen der Rippenstruktur und
- Figur 8: eine perspektivische Darstellung einer Strömungsleitrippe mit versetzt angeordneten Strömungsleitrippenabschnitten.

Die Erfindung betrifft zum Beispiel einen Abgaskühler oder einen Ölkühler eines Kraftfahrzeugs. Der Kühler, der auch als Wärmetauscher bezeichnet wird, umfasst ein Kühlergehäuse, das im Wesentlichen die Gestalt eines länglichen Quaders aufweist. An dem Kühlergehäuse sind ein Kühlmitteleinlassstutzen und ein Kühlmittelauslassstutzen angebracht. An den Stirnseiten des Kühlergehäuses sind bei einem Abgaskühler ein Abgaseinlassstutzen und ein Abgasauslassstutzen angebracht. Durch den Abgaseinlassstutzen kann Abgas in das Kühlergehäuse eintreten, das durch eine Vielzahl von Abgasströmungskanälen in Längsrichtung des Kühlergehäuses zu dem Abgasauslassstutzen geführt wird. Zwischen zwei im Wesentlichen plattenförmigen Abgasströmungskanälen ist jeweils ein im Wesentlichen plattenförmiger Kühlmittelströmungskanal angeordnet.

Das Kühlmittel dient dazu, das durch das Kühlergehäuse hindurch geleitete Abgas abzukühlen. Unter anderem um die Kühlung von Totwassergebieten zu verhindern, sind in den Strömungskanälen Turbulenzeinlagen angeordnet.

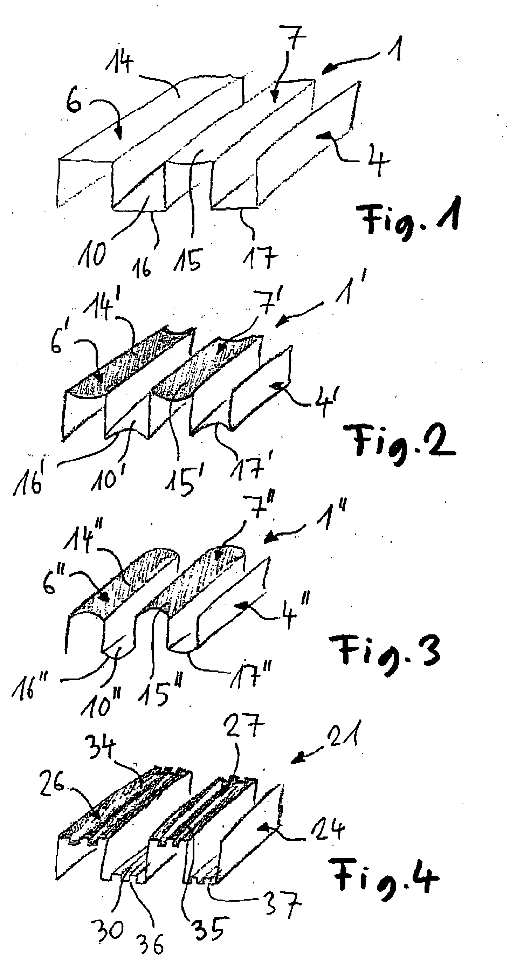

In Figur 1 ist eine Turbulenzeinlage 1 perspektivisch dargestellt. Die Turbulenzeinlage 1 weist eine zinnenförmige Wellrippenstruktur 4 auf. Die Wellrippenstruktur 4 umfasst eine Vielzahl von U-Profilen 6, 7, die jeweils einen rechteckigen Querschnitt aufweisen. Die U-Profile 6, 7 sind jeweils durch einen Verbindungssteg 10 einstückig miteinander verbunden, der die Gestalt einer rechteckigen Platte hat. Die Turbulenzeinlage 1 ist vorzugsweise aus Metallblech, insbesondere Aluminiumblech, gebildet. Die Wellrippenstruktur 4 weist an ihrer Oberseite Flächen 14, 15 auf, an denen die Wellrippenstruktur 4 mit angrenzenden Strömungskanalbegrenzungsflächen verlötet wird. In gleicher Weise weist die Wellrippenstruktur 4 an ihrer Unterseite Flächen 16 und 17 auf, die mit einer weiteren Strömungskanalbegrenzungsfläche verlötet werden.

In Figur 2 ist ein erstes Ausführungsbeispiel einer Turbulenzeinlage 1' mit Lotdepots perspektivisch dargestellt. Die Turbulenzeinlage 1' ähnelt der in Figur 1 dargestellten Turbulenzeinlage 1. Zur Bezeichnung gleicher Teile werden gleiche Bezugszeichen verwendet, die mit einem zusätzlichen Strich versehen sind. Um Wiederholungen zu vermeiden, wird auf die vorangegangene Beschreibung der Figur 1 verwiesen. Im Folgenden wird nur auf die Unterschiede zwischen den beiden Ausführungsbeispielen eingegangen.

Bei dem in Figur 2 dargestellten Ausführungsbeispiel sind die Flächen 14' bis 17' nicht eben ausgebildet, wie bei der in Figur 1 dargestellten Turbulenzeinlage. Die Flächen 14' bis 17' weisen jeweils einen kreisbogenförmigen Querschnitt auf, der nach innen gewölbt ist. Die nach innen gewölbten beziehungsweise vertieften Flächen bilden Aufnahmeräume für Lotdepots.

Bei dem in Figur 3 dargestellten Ausführungsbeispiel werden die gleichen Bezugszeichen wie bei den in den Figuren 1 und 2 dargestellten Ausführungsbeispielen verwendet. Die Bezugszeichen sind jedoch bei dem in Figur 3 dargestellten Ausführungsbeispiel mit zwei Strichen versehen. Die Flächen 14" bis 17" sind bei dem in Figur 3 dargestellten Ausführungsbeispiel leicht nach außen gewölbt, da sie jeweils mit einem Lotdepot ausgestattet sind.

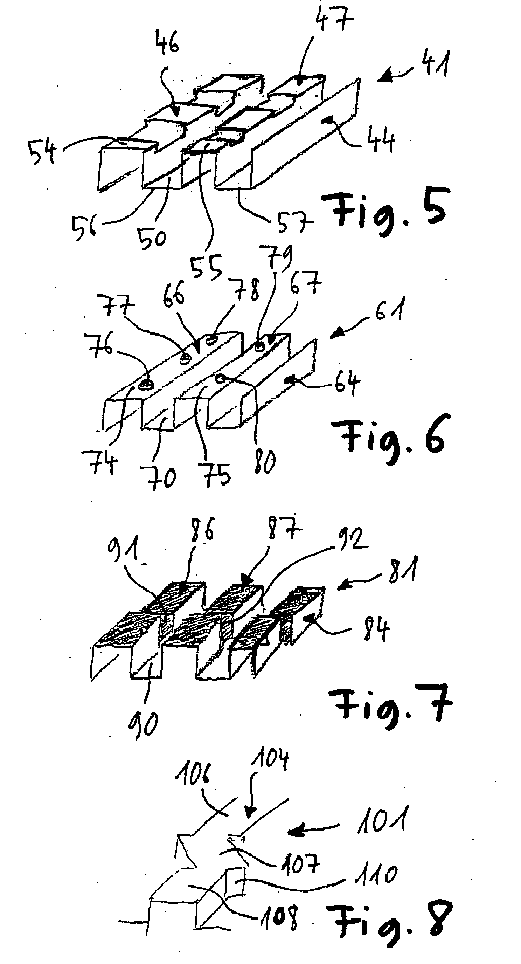

In Figur 4 ist eine Turbulenzeinlage 21 perspektivisch dargestellt. Die Turbulenzeinlage 21 weist eine Wellrippenstruktur 24 mit einem zinnenförmigen Querschnitt auf. Mehrere U-Profile 26, 27 sind durch jeweils einen Verbindungssteg 30 einstückig miteinander verbunden. Die nach oben und nach unten gerichteten Flächen 34 bis 37 der Wellrippenstruktur 24 sind im Querschnitt zinnenförmig ausgebildet. Die Vertiefungen zwischen zwei Zinnen bilden jeweils einen Aufnahmeraum für ein Lotdepot.

In Figur 5 ist eine Turbulenzeinlage 41 perspektivisch dargestellt. Die Turbulenzeinlage 41 umfasst eine Wellrippenstruktur 44, die im Querschnitt zinnenförmig ausgebildet ist. Die Wellrippenstruktur 44 umfasst mehrere Profile 46, 47, die durch jeweils einen Verbindungssteg 50 einstückig miteinander verbunden sind. Die nach oben und nach unten gerichteten Flächen 54 bis 57 der Wellrippenstruktur 44 sind im Längsschnitt zinnenförmig ausgebildet. Die Zwischenräume zwischen zwei Zinnen bilden jeweils einen Aufnahmeraum für ein Lotdepot.

In Figur 6 ist eine Turbulenzeinlage 61 perspektivisch dargestellt. Die Turbulenzeinlage 61 umfasst eine Wellrippenstruktur 64 mit einem zinnenförmigen Querschnitt. Die Wellrippenstruktur 64 umfasst mehrere Profile 66, 67, die jeweils durch einen Verbindungssteg 70 einstückig miteinander verbunden sind. In den nach oben gewandten Flächen 74 und 75 der Wellrippenstruktur 64 sind jeweils mehrere Vertiefungen 76 bis 78 ausgebildet, die jeweils einen Aufnahmeraum für ein Lotdepot bilden. Die Vertiefungen 76 bis 80 haben jeweils die Gestalt eines Kugelabschnitts.

In Figur 7 ist eine Turbulenzeinlage 81 perspektivisch dargestellt. Die Turbulenzeinlage 81 umfasst eine zinnenförmige Wellrippenstruktur 84. Die Wellrippenstruktur 84 wiederum umfasst mehrere Profile 86 und 87, die jeweils durch einen Verbindungssteg 90 einstückig miteinander verbunden sind. Die U-Profile 86 und 87 sind nicht durchgehend ausgebildet, sondern durch jeweils eine Lücke 91, 92 unterbrochen. Die Lücken 91 und 92 haben jeweils die Gestalt von Quadern und bilden Aufnahmeräume für Lotdepots.

In Figur 8 ist ein Ausschnitt einer Turbulenzeinlage 101 perspektivisch dargestellt. Die Turbulenzeinlage 101 umfasst eine Rippe 104, die mehrere, versetzt zueinander angeordnete Rippenabschnitte 106, 107 und 108 aufweist. Durch die versetzte Anordnung weist der Rippenabschnitt 107 an einer seiner Stirnseiten einen freiliegenden Abschnitt 110 auf, der die Gestalt eines Rechtecks hat und eine Aufnahmefläche für ein Lotdepot bildet.

Die in den Figuren 1 bis 8 dargestellten Wellrippenstrukturen werden durch flächiges Verlöten mit Begrenzungswänden von Strömungskanälen zu einem Bauteil gefügt. Durch die erfindungsgemäßen Lotdepots wird das Lot an den zu lötenden Kontaktstellen zur Verfügung gestellt. Die Lotdepots sind vorzugsweise so ausgebildet und angeordnet, dass ein Abschaben von Lot an den Wellrippenstrukturen vermieden wird. Die Ausführung der Lotdepots kann in unterschiedlicher Art und Weise erfolgen. Eine Möglichkeit ist, das Lot auf den Plateaus der Wellrippenstrukturen in Vertiefungen bereitzuhalten. Die Figuren 1 bis 8 zeigen verschiedene Ausführungsbeispiele. Die Vertiefungen können sich über die gesamte Breite beziehungsweise Länge der Profile erstrecken oder nur über Teilbereiche. Die Vertiefungen können gewölbt oder scharfkantig ausgeführt werden. Das Lot kann, wie in Figur 8 angedeutet ist, auch senkrecht zu den zu verlötenden Flächen angeordnet sein.

Durch den Einsatz der erfindungsgemäßen Lotdepots kann ein mechanisches Abschaben des Lots beim Transport der Einzelteile oder beim Einsetzen der Turbulenzeinlagen in die Strömungskanäle deutlich reduziert werden. Beim Verlöten kann Lot aus den Lotdepots in die Fügezone nachfließen.

## Patentansprüche

1. Wärmetauscher mit mindestens einem Strömungskanal, der von einem Medium durchströmt und in dem mindestens eine Strömungsleiteinrichtung (1;21;41;61;81;101) mit mindestens einer Strömungskanalbegrenzungsfläche verlötet ist, **dadurch gekennzeichnet, dass** die Strömungsleiteinrichtung (1;21;41;61;81;101) mindestens ein Lotdepot aufweist.

2. Wärmetauscher nach Anspruch 1, **dadurch gekennzeichnet, dass** die Strömungsleiteinrichtung (1';61) eine Turbulenzeinlage mit einem im Wesentlichen wellenförmigen Profil (4';64) umfasst, wobei mindestens eine einer Strömungskanalbegrenzungsfläche zugewandte Fläche der Turbulenzeinlage mindestens eine Vertiefung (14',15';76-80) aufweist, die ein Lotdepot bildet.

3. Wärmetauscher nach Anspruch 2, **dadurch gekennzeichnet, dass** die Lotdepotvertiefung (76-80) im Wesentlichen die Gestalt eines Kugelabschnitts aufweist.

4. Wärmetauscher nach Anspruch 2, **dadurch gekennzeichnet, dass** die Lotdepotvertiefung (91,92) im Wesentlichen die Gestalt eines Quaders aufweist.

5. Wärmetauscher nach Anspruch 2, **dadurch gekennzeichnet, dass** sich die Lotdepotvertiefung (14',15') über die gesamte Länge oder Breite der der Strömungskanalbegrenzungsfläche zugewandten Fläche der Turbulenzeinlage erstreckt.

6. Wärmetauscher nach Anspruch 5, **dadurch gekennzeichnet, dass** die Lotdepotvertiefung (14',15') im Querschnitt im Wesentlichen die Gestalt eines Kreisbogens aufweist.

7. Wärmetauscher nach Anspruch 5, **dadurch gekennzeichnet, dass** die Lotdepotvertiefung einen U-förmigen Querschnitt aufweist.

8. Wärmetauscher nach Anspruch 1, **dadurch gekennzeichnet, dass** die Strömungsleiteinrichtung (101) eine Turbulenzeinlage mit mehreren Rippenabschnitten (106-108) umfasst, die versetzt zueinander angeordnet sind, wobei mindestens ein freiliegender Bereich (110) einer Stirnseite mindestens eines Rippenabschnitts (107) mit einem Lotdepot ausgestattet ist.

9. Wärmetauscher nach Anspruch 8, **dadurch gekennzeichnet, dass** der freiliegende, stirnseitige Bereich (110) des Rippenabschnitts (107) im Wesentlichen senkrecht zu einer Fläche der Turbulenzeinlage angeordnet ist, die einer Strömungskanalbegrenzungsfläche zugewandt ist.

10. Wärmetauscher nach Anspruch 9, **dadurch gekennzeichnet, dass** der freiliegende, stirnseitige Bereich (110) des Rippenabschnitts (107) im Wesentlichen die Gestalt eines Rechtecks aufweist.

11. Wärmetauscher nach einem der vorhergehenden Ansprüche, **dadurch gekennzeichnet, dass** die Strömungsleiteinrichtung (1';61) eine oder mehrere Wellrippen umfasst.

12. Wärmetauscher nach einem der vorhergehenden Ansprüche, **dadurch gekennzeichnet, dass** die Strömungsleiteinrichtung (1',61) eine oder mehrere miteinander verzahnte Rippen umfasst.
